# EUROPEAN PATENT APPLICATION

(11) **EP 1 699 216 A1**
(43) Date of publication of application: **06.09.2006**
(21) Application number: 05004389.2
(22) Date of filing: 01.03.2005
(51) Int. Cl.: H04M 1/725

(54) **Mobile communication device with accelerometer for reducing the alerting volume of an incoming call**

(71) Applicant: SIEMENS AKTIENGESELLSCHAFT, 80333 München (DE)
(72) Inventor: Joergensen, Carsten Hofmann, 9700 Bronderslev (DK); Marstrand G Micheelsen, Hans J., 9000 Aalborg (DK)

(57) **Abstract**

An accelerometer signal received during establishing an incoming communication connection in a telephone is used to reduce alerting volume or to turn alerting silent, or in addition to this also to reject or answer the incoming communication connection in case of a further accelerometer signal during establishing of the incoming communication connection. Independent claims for a method of using a signal, for an electronic device (10), and for a rechargeable battery (304) comprising an accelerometer (203).

## Description

### Field of the invention

The invention relates to methods for controlling an electronic device, to rechargeable batteries, and to electronic devices. Furthermore, the invention relates to a new use of an accelerometer signal.

### Background art

Many people find it embarrassing if a telephone in their possession rings when they are in a public place but for any reason unable either to immediately accept a call or reject it. Such a situation may arise when the telephone is in a pocket or in a bag, since it takes inevitably some time to dig the telephone out and then press a suitable command key to answer the call or reject it.

One prior art solution is to manually select a suitably sound profile, e.g. vibration alarm or silent alarm, prior to putting the telephone into the pocket or into the bag. This is nevertheless rather problematic, not only because the user is not necessarily all time in such a place where the disturbance would be unpleasant and would thus possibly miss some incoming phone calls, but since the sound profile should then be changed back to normal after the user has returned to surroundings where the alerting phone should not cause embarrassment to the user any more.

Another prior art solution, to avoid disturbing calls in restaurants, concert halls and in similar places, is Ericsson's suggestion for network-enabled call blocking described in published European patent application EP 201 570. There, calls are transferred to a telephone only if it is located in a place where there is a "noise policy" defined. This implementation is not only heavily dependant on network implementation, but it does not work in surroundings normally suitable for receiving telephone calls that are temporarily inappropriate for receiving a telephone call. For example, in one's office, when the chief enters to discuss an important topic, or on the street while being involved in a conversation with a friend.

A further prior art solution as in the abstract of JP 0 111 011 is a telephone that learns when the user cannot usually answer his or her telephone. The telephone comprises an EEPROM where received messages are stored during a call blocking period controlled by a timer. After the timer has expired, the call blocking mode is released. This kind of solution works properly if the user follows similar activity patterns in his or her daily life, but fails completely when the user decides to do something unusual.

A problem underlying the invention is to reduce embarrassment caused by a ringing telephone to the user of the telephone while he or she is unable to answer it. The other side of the coin is to reduce disturbance caused to other people by a ringing telephone in possession of someone who is unable to answer it.

### Summary of the invention

These problems can at least partly be alleviated as set out in the embodiments of independent claims 1, 3, 11, or 12.

Dependent claims describe various advantageous aspects of these embodiments.

### Advantages of the invention

If, in an electronic device, a signal is used to control the electronic device to: i) reduce alerting volume, or ii) turn alerting silent, said signal imparted by an accelerometer or derived from a signal imparted by an accelerometer when the electronic device is alerting or about to alert a user, a new way to make the electronic device silent can be achieved.

A first advantage of such an electronic device is that the electronic device can be made silent even though the user would not have a direct access to it, such as when the electronic device is in a bag or pocket.

A second advantage is that the electronic device will not accidentally be changed to a silent mode, since, in order to have this effect, the electronic device must be alerting or about to alert. Therefore, the probability that the user may lose an alert because of accidentally turning the electronic device that is idle to silent or reducing the alerting volume of such an electronic device can be significantly reduced.

If said controlling of said electronic device is performed if a threshold for magnitude and/or direction of the acceleration has been exceeded, or that a predefined acceleration pattern has been detected, the required acceleration can be more controlled more accurately and e.g. smaller accelerations caused e.g. when the user is walking do not effect the reducing of the alerting volume or to turn alerting silent.

An electronic device that comprises a processing unit, an accelerometer, and means adapted to use a signal to control the electronic device to: i) reduce alerting volume, or ii) turn alerting silent, said signal imparted by said accelerometer or derived from a signal imparted by said accelerometer when said electronic device is alerting or about to alert a user can be made silent even though the user would not have a direct access to it, such as when the electronic device is in a bag or pocket.

If the accelerometer is adapted to impart the signal only when a threshold for magnitude and/or direction of the acceleration has been exceeded, or that a predefined acceleration pattern has been detected, or the means adapted to use the signal from accelerometer are adapted to reduce alerting volume or to turn alerting silent only when a threshold for magnitude and/or direction of the acceleration has been exceeded, or that a predefined acceleration pattern has been detected, the probability of accidentally making the electronic device silent can be reduced.

If the electronic device further comprises means adapted to calibrate said threshold, this probability can be still reduced.

If said threshold has been selected to correspond to a user slapping a housing of the electronic device with his/her hand, in particular with the palm or back of the hand, a straightforward reaction among humans that most humans can carry out extremely fast can be used to relieve the user from the reason of the embarrassment, i.e. to reduce alerting volume or to turn alerting silent.

If the accelerometer is assembled on, at, or in a rechargeable battery from which the accelerometer is in connection with a processing unit via a dedicated signal line or via battery monitor signal line, the extra cost because of the accelerometer can be shifted to those users that require it. Basically, the electronic device can be a normal one, since a rechargeable battery with an accelerometer can easily be added later on, e.g. by buying a supplementary rechargeable battery. Furthermore, because an accelerometer may break if it is exposed to a mechanical shock, in comparison with tediously changing the accelerometer assembled on the PC board, replacing a rechargeable battery is easy and can be carried out quickly also by a non-technically trained person, such as the user.

When said electronic device is a telephone adapted to alert a user when there is an incoming communication connection being established, disturbance of alerting caused by incoming telephony (or video) calls can be avoided in a comfortable way.

When said means are further adapted to command the telephone to reject or answer the incoming communication connection in response to receiving one or more signals imparted by the accelerometer or one or more signals derived from signals imparted the accelerometer during the establishing of the same incoming communication connection, the answering or rejecting a call may be performed also comfortably. This saves telephone network resources since the duration of paging or establishing of communication connection can be shortened.

### List of drawings

In the following, the invention is described in more detail by way of examples shown in the appended drawings in Figures 1 to 4, of which:
Figure 1 illustrates a use case where a telephone is made silent;
Figure 2 shows a telephone comprising an accelerometer;
Figure 3A shows a telephone according to the first embodiment of the invention;
Figure 3B shows a telephone according to the second embodiment of the invention;
Figure 4 illustrates interaction between the accelerometer and an application processor, and the operation of the application processor.

Same reference numerals refer to similar structural elements throughout the Figures.

### Detailed description

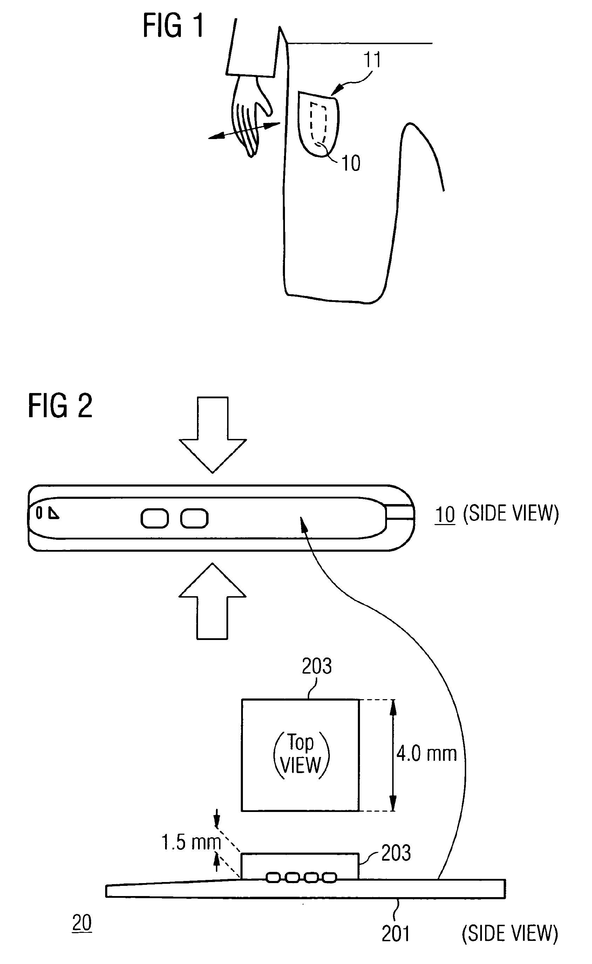

Figure 1 illustrates a telephone 10 that is in a pocket 11, such as a trouser pocket, of the user. When the telephone 10 rings, it may not be very comfortable to dig the telephone 10 out, or that would at least take some time, especially if the pocket 11 is not easily accessible. The ringing of the telephone 10 does tend to annoy other people, which in turn might embarrass the user; so according to one aspect of the present invention, a telephone 10 is developed which the user can simply slap to silent when it is alerting or about to alert.

Figure 2 is a side view of the telephone 10 together with some electrical components 20 comprised in the telephone 10. The telephone 10 comprises an accelerometer 203 preferably assembled on the circuit board 201. When the user slaps the telephone 10 on either side (as illustrated with the thick arrows on the side view of the telephone 10, the accelerometer 203 detects an acceleration. The detected acceleration is used to switch the telephone 10 to a silent mode, if the acceleration is detected when the telephone 10 is paging or about to page, such as what would be the case when the telephone 10 is performing call set-up signaling. By not switching the telephone 10 to a silent mode when the telephone 10 is paging or about to page, erroneous switching to silent mode can be avoided.

New components comprising an accelerometer 203 are rather small, and on the market there are some very small units available dimensioning only 4,0 mm x 4,0 mm with a height of 1,5 mm.

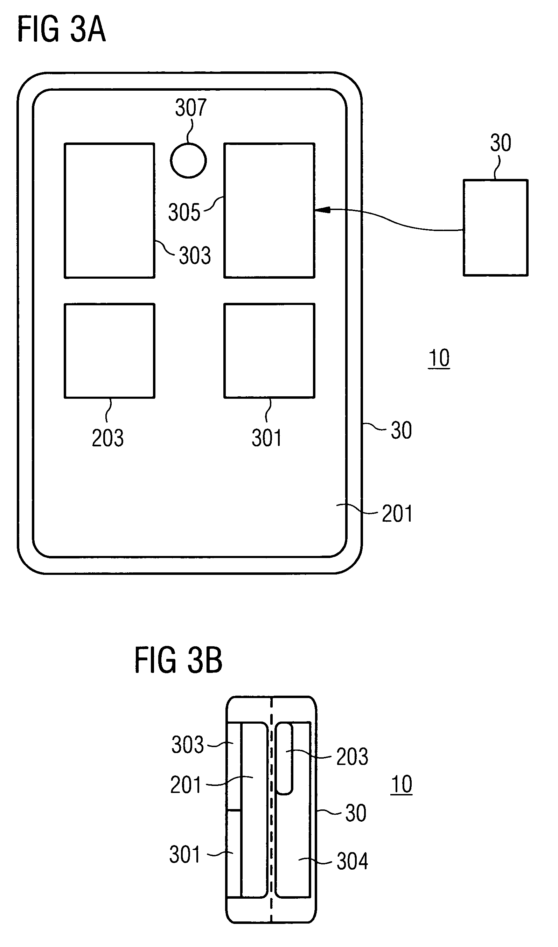

Figure 3A shows some more functional blocks in the housing 30 of the telephone 10. A loudspeaker 307 is electrically connected to the PCB 201, to which also a display 303 and input means 301 such as a keyboard are connected. Furthermore, there is an application processor 305 on the PCB 201. The application processor 305 is adapted to execute a control application 30.

Figure 3B shows another embodiment of the invention. The telephone 10 comprises also a rechargeable battery 304 that is usually underneath of the PCB 201, possibly separated with a thin layer of housing shown with the dashed line to protect the components on the PCB 201 against mechanical damages, moisture and dust. In this embodiment, in contrast to that shown in Figures 2 and 3A, the accelerometer 203 is assembled on, at, or in the rechargeable battery 304.

The accelerometer 203 can be assembled on, at, or in a rechargeable battery 304. The accelerometer 203 can then be in connection with the processing unit 305 via a dedicated signal line. Since many rechargeable batteries comprise a battery monitor, a microchip that monitors the charge state etc. of the rechargeable battery, the accelerometer 203 can be connected to battery monitor e.g. via directly or through the same signaling bus.

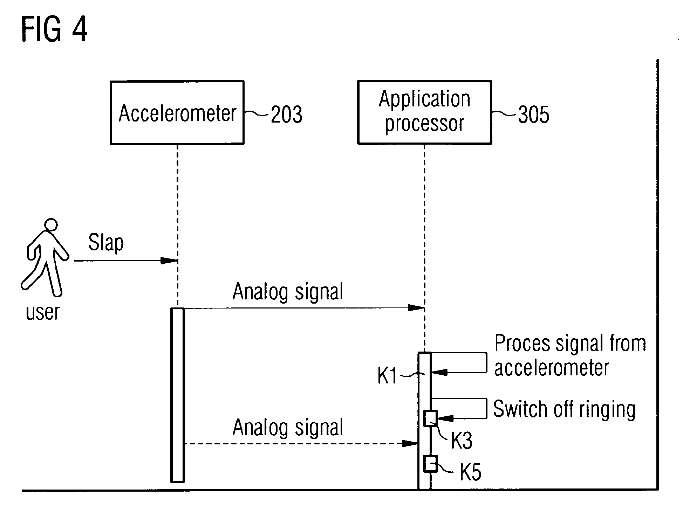

Figure 4 illustrates interaction between the accelerometer 203 and the application processor 305, and the operation of the application processor 305.

In response to the user slapping the telephone 10, the accelerometer 203 detects acceleration and passes it to the application processor 305 in a form of a signal. The application processor 305 processes in step K1 the signal and, if the telephone 10 is alerting or about to alert, reduces in step K3 the alerting volume or turns alerting silent if the telephone is alerting or about to alert the user.

Preferably, the processing unit 305 in step K3 compares whether a threshold for magnitude and/or direction of the acceleration has been exceeded. It is also possible that the accelerometer 203 imparts the signal only when a threshold for magnitude and/or direction for the acceleration has been exceeded, or that a predefined acceleration pattern has been exceeded. With this function, a shaking wherein the telephone is shaken back and forth for a predefined number of times activates the function, for example.

Preferably, the user can customize the predefined thresholds and the predefined acceleration patterns for his or her telephone 10.

In step K5, if a further analog signal is received (marked with a dashed line), the call is either rejected or answered. This feature is again preferably configurable by the user.

The configuration of the threshold for the magnitude of the acceleration, the direction of the acceleration, and acceleration patterns, and the selection which action is performed in step K5 are preferably controllable through the user interface of the telephone. By changing values of relevant parameters, the parameters in the application 30 and/or in the accelerometer 203 are updated accordingly.

The telephone 10 can be any telephone, but especially advantageous the invention is when the telephone is a portable telephone. For example, many mobile telephones that are capable to operate in a cellular network, especially in GSM 900, GSM 1800, CDMA or UMTS networks, or cordless (e.g. DECT) telephones are portable telephones.

In the telephone example, even though the embodiments were described using an example using an incoming call as the reason for causing the telephone to alert. Instead of an incoming (voice or video) call, any incoming communication connection, such as a short message or multimedia message that is being received can cause the alerting. Furthermore, different calendar items can also cause the alert.

The skilled person appreciates that even though the invention was described in more detail by way of an example relating to a telephone, the invention is not limited to a telephone but may be generalized, in line as defined by the patent claims, to any electronic device that may be alerting or about to alert a user. Particular examples of such an electronic device include also cameras, Portable Digital Assistants, watches, and other devices suitable for causing an alert.

## Claims

1. A method of using a signal in an electronic device (10) to control the electronic device (10) to: i) reduce alerting volume, or ii) turn alerting silent, said signal imparted by an accelerometer (203) or derived from a signal imparted by an accelerometer (203) when the electronic device (10) is alerting or about to alert a user.

2. A method according claim 1, **wherein:** the controlling of said electronic device (10) is performed if a threshold for magnitude and/or direction of the acceleration has been exceeded, or that a predefined acceleration pattern has been detected.

3. An electronic device (10), **comprising:** a processing unit (305), an accelerometer (201), and means (30) adapted to use a signal to control the electronic device (10) to: i) reduce alerting volume, or ii) turn alerting silent, said signal imparted by said accelerometer (203) or derived from a signal imparted by said accelerometer (203) when said electronic device (10) is alerting or about to alert a user.

4. An electronic device (10) according to claim 3, **wherein:** the accelerometer (203) is adapted to impart the signal only when a threshold for magnitude and/or direction of the acceleration has been exceeded, or that a predefined acceleration pattern has been detected, or the means (30) adapted to use the signal are adapted to reduce alerting volume or to turn alerting silent only when a threshold for magnitude and/or direction of the acceleration has been exceeded, or that a predefined acceleration pattern has been detected.

5. An electronic device (10) according to claim 4, further comprising means (305; 30) adapted to calibrate said threshold.

6. An electronic device (10) according to claim 4 or 5, further **comprising:** a housing (30), and wherein: said threshold has been selected to correspond to a user slapping the housing (30) with his/her hand.

7. An electronic device (10) according to any one of claims 3 to 6, **wherein:** the accelerometer (203) is assembled on, at, or in a rechargeable battery (304) and wherein the accelerometer (203) is in connection to the processing unit (305) via a dedicated signal line or via battery monitor signal line.

8. An electronic device (10) according to any one of claims 3 to 7, **wherein:** said electronic device (10) is a telephone adapted to alert a user when there is an incoming communication connection being established.

9. An electronic device (10) according to claim 8, **wherein:** said means (30) are further adapted to command the telephone to reject or answer the incoming communication connection in response to receiving one or more further signals imparted by the accelerometer (203) or one or more further signals derived from signals imparted the accelerometer (203) during the establishing of the same incoming communication connection.

10. An electronic device (10) according to claim 8 or 9, **w**herein: said communication connection is a telephone call or a video call.

11. The use of an accelerometer signal received during establishing an incoming communication connection in a telephone to reduce alerting volume or to turn alerting silent, or in addition to this also to reject or answer the incoming communication connection in case of a further accelerometer signal during establishing of the incoming communication connection.

12. A rechargeable battery (304) comprising an accelerometer (203), wherein the accelerometer (203) is connected to a battery monitor or a battery monitor bus.
